# EUROPÄISCHE PATENTSCHRIFT

(11) **EP 3 254 829 B1**
(45) Veröffentlichungstag und Bekanntmachung des Hinweises auf die Patenterteilung: **29.12.2021**
(21) Anmeldenummer: 17174370.1
(22) Anmeldetag: 02.06.2017
(51) Int. Cl.: B29C 64/40, B29C 64/106, B33Y 10/00, B33Y 30/00, B22F 3/105, B28B 1/00, B33Y 70/00, B33Y 50/02

(54) **VORRICHTUNG UND VERFAHREN ZUM GENERATIVEN HERSTELLEN EINES DREIDIMENSIONALEN OBJEKTS**
METHOD AND DEVICE FOR GENERATING A THREE-DIMENSIONAL OBJECT
PROCÉDÉ ET DISPOSITIF DE FABRICATION ADDITIVE D'UN OBJET TRIDIMENSIONNEL

(30) Priorität: 06.06.2016 DE 102016209933
(43) Veröffentlichungstag der Anmeldung: 13.12.2017
(73) Patentinhaber: EOS GmbH Electro Optical Systems, 82152 Krailling (DE)
(72) Erfinder: FEY, Georg, 80336 München (DE)
(74) Vertreter: Prüfer & Partner mbB Patentanwälte · Rechtsanwälte

(56) Entgegenhaltungen:
- EP-A1- 0 529 816
- EP-A1- 3 053 720
- DE-A1- 19 715 582
- DE-A1-102011 089 194
- DE-A1-102011 111 498

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines Aufbaumaterials, vorzugsweise eines Pulvers.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

Ein derartiges Verfahren ist beispielsweise aus der EP 0 737 130 B1 bekannt. Ein pulverförmiges Aufbaumaterial wir dabei schichtweise derart selektiv verfestigt, dass zusammen mit dem Objekt eine das Objekt umschließende Behälterwand hergestellt wird. Das so gebildete Objekt kann nach Fertigstellung mit dem es umgebenden unverfestigten Pulver in dem Behälter aus der Vorrichtung heraus entnommen werden.

Ferner ist in der DE 102006026756 B4 ein Verfahren zum Herstellen großer Formteile beschrieben, wobei zuerst zwei Begrenzungswände des Formteils hergestellt werden und der Zwischenraum dann mit Material aufgefüllt wird. Die Erzeugung der Wände erfolgt dabei durch Werkstoffausgabe an einer Düse.

Das Dokument EP 3053720 A1 beschreibt ein Verfahren zum Herstellen eines dreidimensionalen Objekts durch schichtweises Verfestigen eines pulverartigen Baumaterials mittels Strahlung. Das Verfahren umfasst das Ausbilden eines Begrenzungsbauteils zur Begrenzung eines die Außen- und/oder Innenkontur des herzustellenden Objekts zumindest abschnittsweise abbildenden Bauvolumens, und das Ausbilden des herzustellenden dreidimensionalen Objekts innerhalb des durch das Begrenzungsbauteil begrenzten Bauvolumens.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines Aufbaumaterials bereitzustellen. Insbesondere zielt die Erfindung darauf ab, die Herstellung eines derartigen Objekts, insbesondere beispielsweise eines Objekts mit großen Abmessungen, kostengünstig und/oder zeiteffizient durchzuführen.

Diese Aufgabe wird gelöst durch ein Verfahren gemäß Anspruch 1 und eine Vorrichtung gemäß Anspruch 10 sowie durch eine Steuereinheit gemäß Anspruch 15. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtung bzw. Steuereinheit weitergebildet sein oder jeweils umgekehrt.

Das erfindungsgemäße Verfahren ist geeignet zum Herstellen eines dreidimensionalen Objekts und eines Begrenzungsbereichs durch schichtweises Aufbringen und Verfestigen wenigstens eines Aufbaumaterials. Das dreidimensionale Objekt wird dabei mit einem ersten generativen Herstellungsverfahren auf Basis eines ersten Aufbaumaterials hergestellt und der Begrenzungsbereich mit einem von dem ersten generativen Herstellungsverfahren unterschiedlichen zweiten generativen Herstellungsverfahren auf Basis eines zweiten Aufbaumaterials, wobei sich das erste generative Herstellungsverfahren von dem zweiten generativen Herstellungsverfahren dadurch unterscheidet, dass das Aufbringen des ersten und des zweiten Aufbaumaterials mit unterschiedlichen Verfahren erfolgt. Dabei umfasst das erste generative Herstellungsverfahren die Schritte:
- Aufbringen einer Schicht des ersten Aufbaumaterials auf eine Bauunterlage oder eine bereits zuvor aufgebrachte Schicht,
- selektives Verfestigen der aufgebrachten Schicht an dem Querschnitt des Objekts in der jeweiligen Schicht entsprechenden Stellen und
- Wiederholen der Schritte des Aufbringens und des selektiven Verfestigens, bis das Objekt fertiggestellt ist.

Das erste und das zweite generative Herstellungsverfahren werden dabei derart durchgeführt, dass der Begrenzungsbereich das Objekt zumindest abschnittsweise umschließt.

Der Begrenzungsbereich ist ein vom herzustellenden Objekt separates Objekt. Er begrenzt einen Bauraum, in dem das herzustellende Objekt gefertigt wird, z. B. auf eine einfache geometrische Struktur, die eine maximale Ausdehnung des Objekts umfasst. Der Begrenzungsbereich kann nach Art einer Schalung nach dem Herstellungsprozess von dem Objekt getrennt und vorzugsweise rückstandslos davon entfernt werden. Er kann durch ein additives Herstellungsverfahren im engeren Sinne hergestellt werden oder schichtweise aus z. B. vorgefertigten Segmenten aufgebaut werden, die wiederum aus kleineren Bausteinen bestehen können. Der Begriff "generatives Herstellungsverfahren" umfasst im Rahmen der Erfindung damit auch den Fall, dass mehrere Elemente, die selbst nicht in einem generativen Herstellungsverfahren hergestellt worden sind, z. B. in einem Guss- oder Fräsverfahren, zu einem Begrenzungsbereich zusammengefügt werden. Die Formgebung des Begrenzungsbereichs erfolgt demzufolge durch schichtweises oder modulares Zusammenfügen gebildeter Volumenelemente. Die Gestalt des Begrenzungsbereichs bzw. seiner Einzelelemente ist dabei typischerweise durch ein CAD-Modell vorgegeben.

Im Rahmen der Erfindung muss eine Verbindung zwischen den Segmenten bzw. Modulen des Begrenzungsbereichs nicht zwingend durch Verkleben, Verbacken oder Verschmelzen entstehen, sondern kann auch nach den Prinzipien des Kraft- und/oder Formschlusses gestaltet sein. Außerdem schließt die Herstellung der Segmente bzw. Module den Gebrauch eines Formwerkzeugs dafür nicht aus.

Unter "abschnittsweise umschließen" ist zu verstehen, dass der Begrenzungsbereich das Objekt in mindestens zwei Raumrichtungen umschließt, wobei sich dieses Umschließen sowohl auf eine oder mehrere Schichten bzw. beliebig gewählte Querschnitte des Objekts bezieht, bevorzugt auf alle Schichten bzw. Querschnitte. Das Objekt kann auch in allen drei Raumrichtungen von dem Begrenzungsbereich umschlossen sein, wobei analog auch ein partielles dreidimensionales oder komplettes Umschließen des Objekts verstanden wird. Mit "umschließen" ist jedoch nicht gemeint, dass alle Außenflächen des Objekts direkt an den Begrenzungsbereich angrenzen. Vielmehr kann sich auch unverfestigtes erstes Aufbaumaterial in einem Zwischenraum zwischen dem Objekt und dem Begrenzungsbereich befinden.

Dadurch ist es beispielsweise möglich, den schichtweisen Materialauftrag des ersten Aufbaumaterials zumindest teilweise in einer durch den Begrenzungsbereich begrenzten Fläche durchzuführen. Dies führt insbesondere bei großen herzustellenden Objekten unter anderem dazu, dass die Menge an für das Objekt bereitzustellendem Aufbaumaterial reduziert und die Herstellungszeit verringert werden können, was den Herstellungsvorgang zeit- und kosteneffizienter gestaltet.

Vorzugsweise unterscheidet sich das erste generative Herstellungsverfahren von dem zweiten generativen Herstellungsverfahren weiter dadurch, dass das Verfestigen des ersten und des zweiten Aufbaumaterials mit unterschiedlichen Verfahren erfolgt. Dadurch kann beispielsweise der Begrenzungsbereich mit einem schnellen Herstellungsverfahren (insbesondere als das erste Herstellungsverfahren) hergestellt werden, ohne die Qualität des Objektes negativ zu beeinflussen.

Vorzugsweise umfasst das zweite generative Herstellungsverfahren folgende Schritte:
- selektives Auftragen einer Schicht des zweiten Aufbaumaterials auf eine Bauunterlage oder eine zuvor aufgetragene Schicht an dem Querschnitt des Begrenzungsbereichs in der jeweiligen Schicht entsprechenden Stellen,
- Verfestigen der aufgebrachten Schicht und
- Wiederholen der Schritte des selektiven Aufbringens und des Verfestigens, bis der Begrenzungsbereich fertiggestellt ist. Dadurch ist es beispielsweise möglich, den Begrenzungsbereich auf einfache und schnelle Art und Weise herzustellen.

Prinzipiell ist es möglich, dass das erste und das zweite Aufbaumaterial gleich, also identisch sind. Vorzugsweise sind das erste Aufbaumaterial und das zweite Aufbaumaterial unterschiedlich. Dadurch ist es beispielsweise möglich, ein kostengünstiges und/oder schnell zu verarbeitendes zweites Aufbaumaterial (insbesondere als das erste Aufbaumaterial) zum Herstellen des Begrenzungsbereichs zu verwenden.

Vorzugsweise werden das erste generative Herstellungsverfahren und das zweite generative Herstellungsverfahren zumindest zeitweise gleichzeitig oder einander abwechselnd durchgeführt. Dies beschleunigt beispielsweise den Herstellungsvorgang des Objekts, da lange Wartezeiten zum Herstellen des Begrenzungsbereichs weitgehend entfallen.

Vorzugsweise werden das erste und das zweite generative Herstellungsverfahren derart durchgeführt, dass der Begrenzungsbereich das Objekt in zumindest zwei Raumrichtungen, vorzugsweise in einer schichtparallelen x- und einer schichtparallelen y-Richtung, im Wesentlichen vollständig umschließt. Dadurch ist es beispielsweise möglich, den Auftrag jeder Schicht des ersten Aufbaumaterials, aus welchem das herzustellende Objekt gebildet wird, auf eine möglichst kleine Fläche zu beschränken.

Vorzugsweise erfolgt das Aufbringen einer Schicht des ersten Aufbaumaterials gemäß dem ersten generativen Herstellungsverfahren im Wesentlichen ausschließlich in einer durch den Begrenzungsbereich begrenzten Fläche. Der Begrenzungsbereich kann somit beispielsweise einen Baubehälter für das herzustellende Objekt bilden und der Materialauftrag einer Schicht des zweiten Aufbaumaterials erfolgt somit räumlich begrenzt in einer Fläche innerhalb des Begrenzungsbereichs. Somit kann beispielsweise die benötigte Menge des ersten Aufbaumaterials verringert werden.

Vorzugsweise wird das dreidimensionale Objekt nach seiner Fertigstellung aus dem Begrenzungsbereich entfernt und/oder der Begrenzungsbereich wird von dem Objekt entfernt. Dadurch kann das hergestellte Objekt beispielsweise einer Nachbehandlung unterzogen werden.

Vorzugsweise umfasst das erste generative Herstellungsverfahren ein pulverbettbasiertes Verfahren unter Verwendung einer Quelle elektromagnetischer Strahlung oder Teilchenstrahlung und/oder das zweite generative Herstellungsverfahren umfasst ein nicht pulverbettbasiertes Verfahren, insbesondere ein Schmelzschichtungsverfahren. Somit kann beispielsweise das Objekt in guter Qualität und hoher Detailpräzision hergestellt werden, während der Begrenzungsbereich kostengünstig und zeiteffizient hergestellt werden kann. Ein Schmelzschichtverfahren ermöglicht dabei beispielsweise den Begrenzungsbereich frei, d.h. ohne Einhausung, aufzubauen.

Eine erfindungsgemäße Vorrichtung zum Herstellen eines dreidimensionalen Objekts und eines Begrenzungsbereichs durch schichtweises Aufbringen und Verfestigen wenigstens eines Aufbaumaterials ist im Anspruch 10 definiert.

Dadurch wird beispielsweise eine Vorrichtung bereitgestellt, mit der das erfindungsgemäße Verfahren ausgeführt werden kann.

Vorzugsweise umfasst die Vorrichtung zumindest eine zweite Auftrags- und/oder Verfestigungseinrichtung zum Aufbringen und/oder Verfestigen des zweiten Aufbaumaterials gemäß des zweiten generativen Herstellungsverfahrens. Dadurch ist es beispielsweise möglich, den Materialauftrag und/oder das Verfestigen des ersten und zweiten Aufbaumaterials im Wesentlichen gleichzeitig durchzuführen.

Vorzugsweise umfasst die Vorrichtung zumindest eine Absaugeinrichtung. Dadurch können beispielsweise entstehende Prozessnebenprodukte, wie z.B. Spratzer, Rauch und Dämpfe, durch einen Gasstrom von dem Verfestigungsbereich abgeleitet werden.

Vorzugsweise sind die Auftragseinrichtung(en) und/oder die Verfestigungseinrichtung(en) und/oder die Absaugeinrichtung(en) bewegbar in der Vorrichtung angeordnet. Dadurch können beispielsweise der Materialauftrag und/oder das (selektive) Verfestigen des Materials und/oder das Absaugen von Prozessnebenprodukten parallel, d.h. an verschiedenen Stellen gleichzeitig, durchgeführt werden.

Prinzipiell ist es möglich, dass die Vorrichtung eine einzige Bauunterlage zum Aufbauen des dreidimensionalen Objekts umfasst. Vorzugsweise umfasst die Vorrichtung eine erste Bauunterlage zum Aufbauen des dreidimensionalen Objekts, sowie zumindest eine zweite Bauunterlage zum Aufbauen des Begrenzungsbereichs. Dadurch ist es beispielsweise möglich, das Objekt zur besseren Stabilität direkt auf der ersten Bauunterlage herzustellen, so dass das Aufbaumaterial bei der Verfestigung an diese anhaftet und das herzustellende Objekt mit dieser verbunden ist.

Eine Steuereinheit für eine erfindungsgemäße Vorrichtung ist dazu ausgebildet und/oder programmiert die Vorrichtung so zu steuern, dass sie dazu geeignet ist ein erfindungsgemäßes Verfahren durchzuführen. Dadurch wird beispielsweise eine Steuereinrichtung bereitgestellt, die in der Lage ist, eine Vorrichtung zum Herstellen eines dreidimensionalen Objekts so zu steuern, dass sie das erfindungsgemäße Verfahren automatisch durchführt.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte und teilweise perspektivische Ansicht einer Vorrichtung zum generativen Herstellen eines dreidimensionalen Objekts mit einem Begrenzungsbereich gemäß einem ersten Ausführungsbeispiel der vorliegenden Erfindung,
- Fig. 2a: und 2b sind perspektivische bzw. schematische Darstellungen eines herzustellenden Objekts im Rahmen der Durchführung eines Ausführungsbeispiels des erfindungsgemäßen Verfahrens,
- Fig. 3a: und 3b sind schematische Ansichten einer zweiten Ausführungsform einer Bauplattform in einer erfindungsgemäßen Vorrichtung,
- Fig. 4: ist eine schematische Ansicht einer dritten Ausführungsform einer Bauplattform in einer erfindungsgemäßen Vorrichtung,
- Fig. 5: ist eine schematische Ansicht einer Weiterbildung des Begrenzungsbereichs im Rahmen einer Weiterbildung des erfindungsgemäßen Verfahrens,
- Fig. 6a: und 6b sind schematische bzw. perspektivische Darstellungen einer zweiten Weiterbildung des Begrenzungsbereichs im Rahmen eines Ausführungsbeispiels des erfindungsgemäßen Verfahrens.

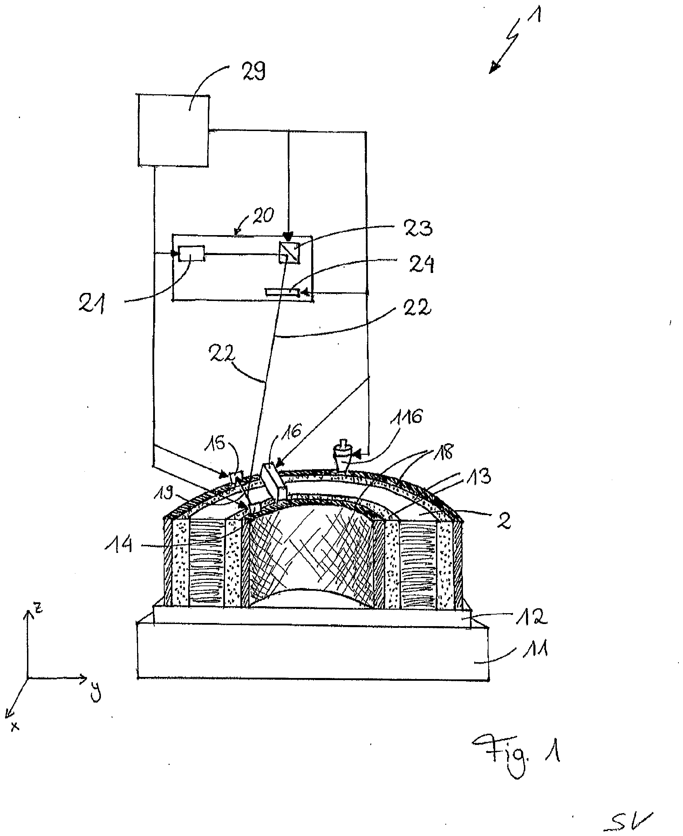

Im Folgenden wird mit Bezug auf Fig. 1 eine erste Ausführungsform der vorliegenden Erfindung beschrieben. Die in Fig. 1 dargestellte Vorrichtung 1 ist eine modifizierte Lasersinter- oder Laserschmelzvorrichtung.

Als Bauunterlage zum Aufbauen eines Objekts 2 und eines Begrenzungsbereichs 18 ist eine Grundplatte 11 vorgesehen. Je nach verwendetem Aufbaumaterial und Prozess kann auf der Grundplatte 11 noch eine Bauplattform 12 als Bauunterlage angebracht sein, auf der das Objekt 2 aufgebaut wird. Das Objekt 2 und der Begrenzungsbereich 18 können aber auch auf der Grundplatte 11 selber aufgebaut werden, die dann als Bauunterlage dient.

In Fig. 1 ist das auf der Bauplattform 12 zu bildende Objekt 2 in einem Zwischenzustand dargestellt mit mehreren verfestigten Schichten, umgeben von unverfestigt gebliebenem ersten Aufbaumaterial 13. Der Begrenzungsbereich 18 ist um das Objekt 2 herum gebildet, so dass er einen Raum definiert, in welchem sich das zu bildende Objekt 2 und das dieses umgebende unverfestigt gebliebene erste Aufbaumaterial 13 befinden. Der durch den Begrenzungsbereich 18 definierte Raum ist dabei nach unten durch die Bauplattform 12 abgeschlossen. Somit umschließt der Begrenzungsbereich 18 das zu bildende Objekt 2 in der x- und y-Richtung im Wesentlichen vollständig, wobei die x-y-Ebene definiert ist als eine Ebene, welche parallel zu den (selektiv) verfestigten Schichten verläuft. Die z-Richtung des kartesischen Koordinatensystems ist somit definiert als die Richtung, in welcher der Bauvorgang fortschreitet. Vorzugsweise erstreckt sich die x-y-Ebene im Wesentlichen in der horizontalen Ebene, während die z-Richtung im Wesentlichen die vertikale Richtung ist.

Die Vorrichtung 1 enthält weiter einen in Fig. 1 nicht näher gezeigten ersten Vorratsbehälter für ein durch elektromagnetische Strahlung verfestigbares erstes pulverförmiges Aufbaumaterial und eine erste Auftragseinrichtung 16 zum Aufbringen des ersten Aufbaumaterials auf die Bauplattform 12 oder eine bereits aufgebrachte Schicht des ersten Aufbaumaterials. Die erste Auftragseinrichtung 16 ist derart in der Vorrichtung 1 angeordnet, dass sie in der schichtparallelen x-y-Ebene sowie in der z-Richtung verfahrbar ist. Der nicht gezeigte Vorratsbehälter kann ebenfalls verfahrbar in der Vorrichtung 1 angeordnet sein und/oder integral mit der Auftragseinrichtung 16 gebildet sein.

Die Vorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 auf eine aufgebrachte Schicht des ersten Aufbaumaterials fokussiert wird. Die Belichtungsvorrichtung 20 kann dabei derart ausgeführt und/oder in der modifizierten Lasersintervorrichtung 1 angeordnet sein, dass der Laserstrahl in allen Schichten auf alle zu belichtenden Bereiche des Objektquerschnitts umgelenkt und fokussiert werden kann. Alternativ dazu kann die Belichtungsvorrichtung 20 auch in z-Richtung und/oder in einer Ebene, welche parallel zur x-y-Ebene ist, verfahrbar in der Vorrichtung 1 angeordnet sein.

Optional enthält die Vorrichtung 1 eine erste Düse 14 auf einer ersten Seite der Stelle, an welcher der Laserstrahl 22 auf der aufgetragenen Schicht des ersten Verfestigungsmaterials auftrifft, und eine zweite Düse 15 auf der der ersten Düse 14 gegenüberliegenden Seite des auftreffenden Laserstrahls 22. Die Düsen 14, 15 sind dazu ausgebildet, einen Gasstrom 19 an der Verfestigungsstelle zu erzeugen.

Die Vorrichtung 1 enthält weiter einen in Fig. 1 nicht gezeigten zweiten Vorratsbehälter für ein zweites, durch Abkühlen aushärtbares Aufbaumaterial, beispielsweise ein Wachs oder ein Thermoplast oder ein thermoplastischer Elastomer. In der Vorrichtung 1 ist eine zweite, als Materialaustragsdüse 116 ausgeführte Auftragseinrichtung angeordnet zum Aufbringen des zweiten Aufbaumaterials auf die Bauplattform 12 oder eine bereits aufgetragene Schicht des zweiten Aufbaumaterials. Die Materialaustragsdüse 116 ist derart in der Vorrichtung 1 angeordnet, dass sie in der schichtparallelen x-y-Ebene sowie in der z-Richtung verfahrbar ist. Der zweite Vorratsbehälter kann ebenfalls verfahrbar in der Vorrichtung 1 angeordnet sein, oder integral mit der Materialaustragsdüse 116 gebildet sein.

Weiter enthält die modifizierte Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb fährt die Materialaustragsdüse 116 zum Aufbringen einer Schicht des zweiten Aufbaumaterials über die dem Querschnitt des Begrenzungsbereichs 18 in der jeweiligen Schicht entsprechenden Stellen und bringt so, formbares, beispielsweise erwärmtes, zweites Aufbaumaterial auf die Bauunterlage oder eine bereits zuvor aufgetragene Schicht des zweiten Aufbaumaterials auf. Die aufgebrachte Schicht des zweiten Aufbaumaterials härtet - beispielsweise durch anschließendes Abkühlen - aus und bildet so einen Querschnitt des Begrenzungsbereichs 18. Der Materialauftrag erfolgt dabei vorzugsweise in einer Aufbringebene, welche parallel zur x-y-Ebene ist, derart, dass durch die aufgetragene Schicht eine Fläche in der Aufbringebene definiert ist, wobei diese Fläche eine geschlossene Berandung aufweist und die Berandung durch die aufgetragene Schicht des zweiten Aufbaumaterials gebildet ist.

Anschließend fährt die Auftragseinrichtung 16 zu dem Vorratsbehälter und nimmt aus ihm eine zum Aufbringen einer Schicht ausreichende Menge des ersten Aufbaumaterials auf. Dann fährt sie über die durch die ausgehärtete Schicht des Begrenzungsbereichs 18 berandete Fläche und bringt dort eine dünne Schicht des pulverförmigen Aufbaumaterials auf die Bauunterlage oder eine bereits vorher vorhandene Pulverschicht auf. Das Aufbringen erfolgt zumindest über den gesamten Querschnitt des herzustellenden Objekts 2, vorzugsweise über die gesamte durch den Begrenzungsbereich 18 berandete Fläche. Dann wird der Querschnitt des herzustellenden Objekts 2 von dem Laserstrahl 22 abgetastet, sodass das pulverförmige Aufbaumaterial an den Stellen, die dem Querschnitt des herzustellenden Objekts 2 entsprechen, durch die durch die Strahlung eingebrachte Wärmeenergie teilweise oder vollständig aufgeschmolzen wird. Nach dem Abkühlen liegen die abgetasteten Stellen dann miteinander als Objektquerschnitt in der entsprechenden Schicht vor.

Während der Verfestigung des Objektquerschnitts wird optional durch die Düsen 14, 15 ein horizontal gerichteter Gasstrom 19 erzeugt, indem ein Gas aus der Düse 14 austritt und von der Düse 15 angesaugt wird. Die Düsen 14, 15 fahren dabei seitlich der Auftreffstelle des Laserstrahls 22 mit dieser über die aufgebrachte Schicht, so dass durch das teilweise oder vollständige Aufschmelzen des Pulvers entstehende Prozessnebenprodukte, wie z.B. Spratzer, Rauch und Dämpfe, durch den Gasstrom 19 von dem Verfestigungsbereich abgeleitet werden.

Dabei muss mit dem Schichtauftrag des ersten Aufbaumaterials nicht gewartet werden, bis die gesamte Schicht des zweiten Aufbaumaterials vollständig aufgetragen und ausgehärtet ist. Vielmehr kann der Schichtauftrag gemäß des ersten, das dreidimensionale Objekt 2 aufbauenden, Herstellungsverfahrens bereits begonnen werden, sobald ein erster Abschnitt der aufgetragenen Schicht des zweiten Aufbaumaterials ausgehärtet ist. Die Materialaustragsdüse 116 fährt somit in der Aufbringebene und wird in einem gewissen Abstand von der Auftragseinrichtung 16 gefolgt, wobei der Abstand unter anderem durch die Aushärtzeit der aufgetragenen Schicht des zweiten Aufbaumaterials abhängt. Der Laserstrahl 22 und die Düsen 14, 15 folgen der Auftragseinrichtung 16 ebenfalls in der Aufbringebene. Insbesondere kann mit der Verfestigung des ersten Aufbaumaterials bereits begonnen werden, bevor eine vollständige Schicht des ersten Aufbaumaterials aufgebracht wurde.

Nach dem Auftragen und Verfestigen einer Schicht des Begrenzungsbereichs 18 und des Objekts 2 werden die Materialaustragsdüse 116, die Auftragseinrichtung 16, die Düsen 14, 15 und gegebenenfalls die Belichtungsvorrichtung 20 um eine Höhe erhöht, die der gewünschten Schichtdicke entspricht.

Diese Schritte werden solange wiederholt, bis das Objekt 2 und der Begrenzungsbereich 18 fertiggestellt sind. Anschließend wird das Objekt 2 aus dem Begrenzungsbereich 18 und aus der Vorrichtung 1 entnommen.

Dabei ist es nicht zwingend notwendig, dass die Schichtdicke einer Schicht des ersten und des zweiten Aufbaumaterials gleich groß sind. Vielmehr kann eine aufgetragene Schicht des zweiten Aufbaumaterials auch dicker sein als eine Schicht des ersten Aufbaumaterials. In diesem Fall wird eine Schicht des zweiten Aufbaumaterials an dem Querschnitt des Begrenzungsbereichs 18 entsprechenden Stellen verfestigt und dann eine Anzahl von Schichten des ersten Aufbaumaterials aufgebracht und jeweils an dem Querschnitt des Objekts 2 entsprechenden Stellen verfestigt, wobei die Anzahl der Schichten des ersten Aufbaumaterials derart gewählt ist, dass ein Objektbereich hergestellt wird, welcher im Wesentlichen der Abmessung der aufgetragenen Schicht des zweiten Aufbaumaterials senkrecht zur Schicht entspricht.

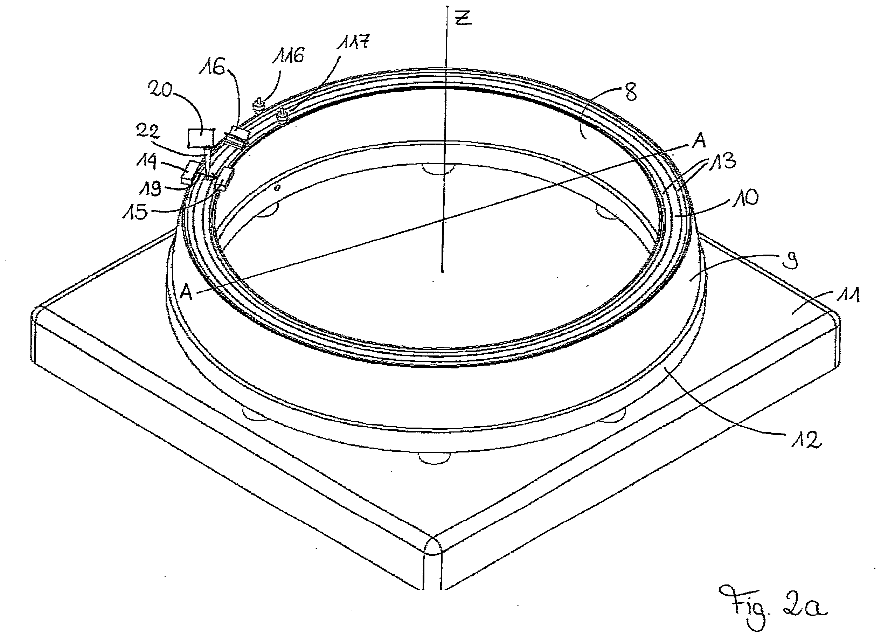

Bei einfachen Geometrien des Objekts 2, wie beispielsweise der in Fig. 2a gezeigten Geometrie, kann der Begrenzungsbereich 18 nach Fertigstellung des Objekts 2 einfach von diesem entfernt werden. Zum Entfernen des Begrenzungsbereichs 18 kann dieser jedoch auch vollständig oder teilweise zerstört werden, beispielsweise durch mechanisches Trennen (z.B. Sägen, Brechen, Abstrahlen), oder Auflösen des Begrenzungsbereichs mittels chemischer Prozesse.

Fig. 2a zeigt als herzustellendes Objekt 2 einen geraden, nach oben und unten offenen Kreiszylinder 10, welcher von unverfestigt gebliebenem pulverförmigen Aufbaumaterial 13 umgeben ist. Der Zylinder 10 und das unverfestigt gebliebene erste Aufbaumaterial 13 befinden sich zwischen zwei weiteren Kreiszylindern 8, 9, welche den Begrenzungsbereich 18 bilden. Die drei Kreiszylinder 8, 9, 10 sind dabei derart angeordnet, dass ihre Achsen in einer Geraden Z zusammenfallen.

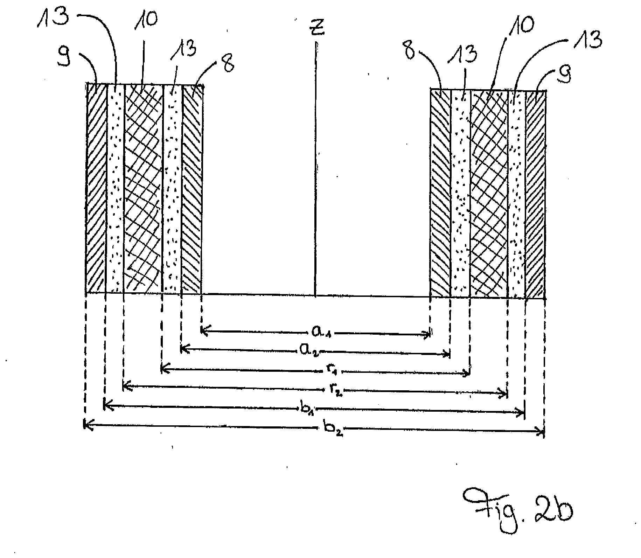

Fig. 2b zeigt eine schematische Ansicht eines horizontalen Schnitts durch die Kreiszylinder 8, 9, 10 entlang der in Fig. 2a gezeigten Linie A-A. Die Zylinder 8, 9 und 10 weisen jeweils einen inneren Durchmesser a₁, b₁ bzw. r₁ auf und einen äußeren Durchmesser a₂, b₂ bzw. r₂, wobei gilt: a₁ < a₂ < r₁ < r₂ < b₁ < b₂. Die Dicke der Kreiszylinder 8, 9, 10 ist somit a₁-a₂ bzw. b₁-b₂ bzw. r₁- r₂ .

Gemäß Fig. 2a sind in der Vorrichtung 1 zwei Materialaustragsdüsen 116, 117 vorgesehen. Im Betrieb fährt die erste Materialaustragsdüse 116 in der Auftragsebene im Uhrzeigersinn entlang eines Kreisrings mit dem inneren Radius b₁ und dem äußeren Radius b₂ und bringt dort eine Schicht des zweiten Aufbaumaterials auf. Die zweite Materialaustragsdüse 117 fährt gleichzeitig parallel zur ersten Materialaustragsdüse 116 in der Auftragsebene im Uhrzeigersinn entlang eines Kreisrings mit dem inneren Radius a₁ und dem äußeren Radius a₂ und bringt dort eine Schicht des zweiten Aufbaumaterials auf. Sobald das aufgetragene zweite Aufbaumaterial ausgehärtet ist, trägt die Auftragseinrichtung 16 in der Auftragsebene im Uhrzeigersinn eine Schicht des ersten pulverförmigen Aufbaumaterials zwischen den durch die Materialaustragsdüsen 116, 117 aufgebrachten Kreisringe 8, 9 auf. Anschließend wird die aufgetragene Pulverschicht im Bereich eines Kreisrings mit dem inneren Radius r₁ und dem äußeren Radius r₂ verfestigt. Die Materialaustragsdüsen 116, 117, die Auftragseinrichtung 16, die Belichtungsvorrichtung 20 und die Düsen 14, 15 fahren somit auf konzentrischen Kreisen im Uhrzeigersinn um die Gerade Z. Nach einem vollständigen Umlauf ist eine Schicht der Kreiszylinder 8, 9, 10 aufgebracht und verfestigt und die Einrichtungen werden um den Betrag einer Schichtdicke nach oben verfahren. Diese Schritte werden solange wiederholt, bis das Objekt 2 und der Begrenzungsbereich 18 fertiggestellt sind. Dabei können sich die Einrichtungen auch entgegen dem Uhrzeigersinn bewegen.

Der aus den Kreiszylindern 8, 9 gebildete Begrenzungsbereich 18 weist somit eine Geometrie auf, welche an den zu bildenden Zylinder 10, d.h. das herzustellende Objekt 2, angepasst ist.

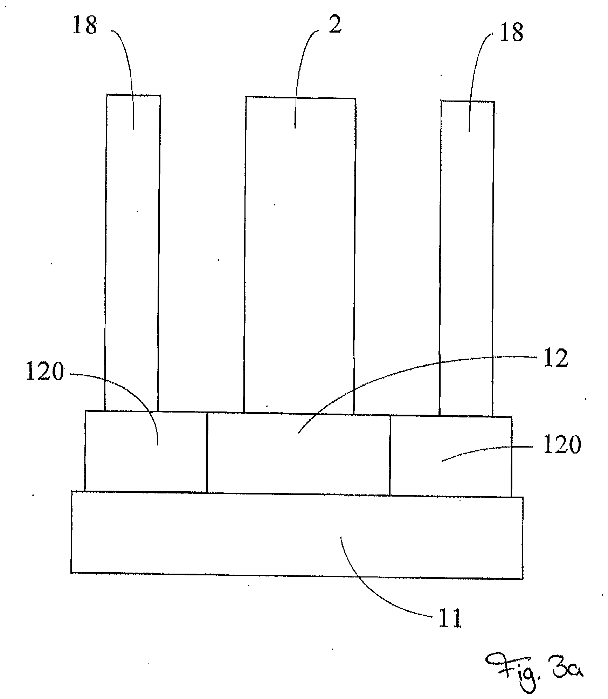

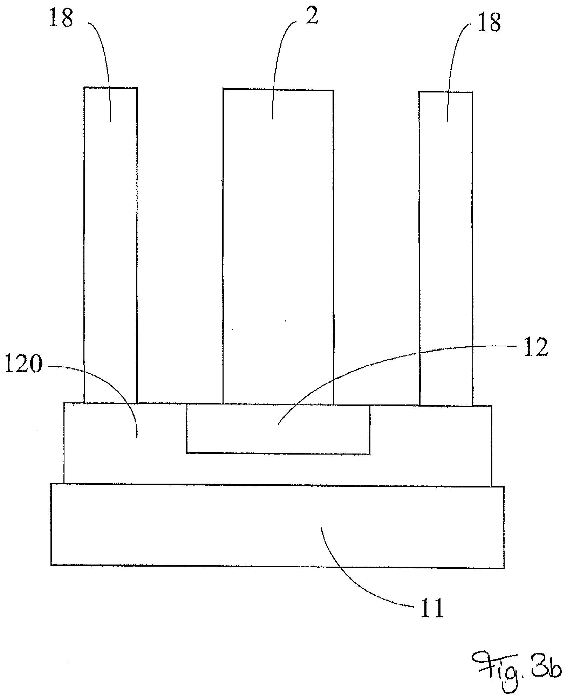

In einer zweiten Ausführungsform der Bauunterlage gemäß Fig. 3a und 3b ist auf der Grundplatte 11 neben der Bauplattform 12 zumindest eine zweite Bauplattform 120 angebracht. Fig. 3a zeigt eine Ausführungsform mit zwei zweiten Bauplattformen 120. Gemäß Fig. 3b kann jedoch auch eine zweite Bauplattform 120 mit einer Ausnehmung vorgesehen sein, in welche die erste Bauplattform 12 eingepasst ist. Das dreidimensionale Objekt 2 wird dabei auf der Bauplattform 12 hergestellt und der Begrenzungsbereich 18 auf der bzw. den Bauplattform(en) 120. Nach dem Bauvorgang können das fertige dreidimensionale Objekt 2 und der Begrenzungsbereich 18 separat aus der Vorrichtung 1 entnommen werden ohne das Objekt 2 und/oder den Begrenzungsbereich 18 vorher von der Bauplattform 12 bzw. 120 zu lösen.

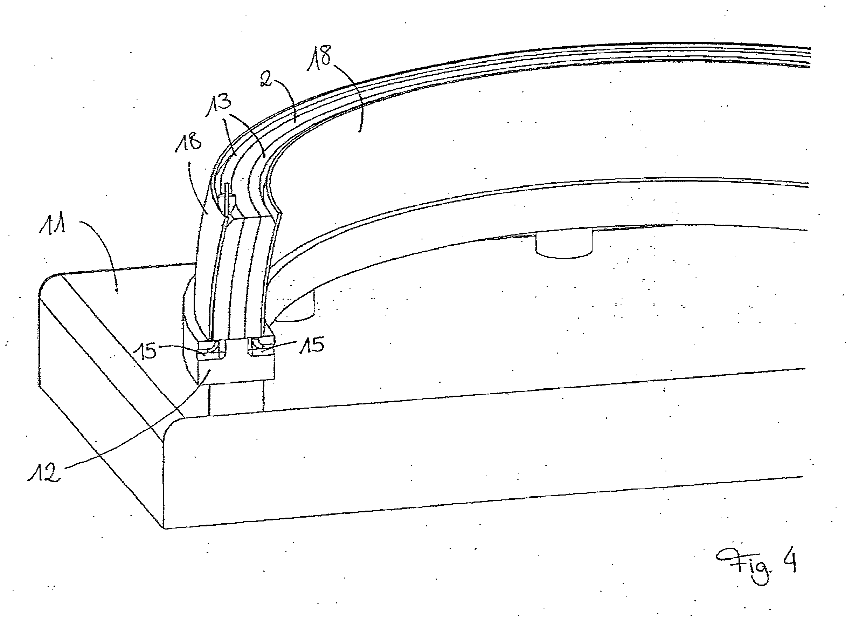

In einer dritten Ausführungsform der Bauunterlage gemäß Fig. 4 sind Kanäle 15 in der Bauplattform 12 vorgesehen. Die Kanäle 15 stellen dabei eine Verbindung zwischen dem Innenbereich und dem Außenbereich des Begrenzungsbereichs 18 her. Die im Inneren des Begrenzungsbereichs 18 liegende Öffnung der Kanäle 15 ist dabei zumindest teilweise im Bereich des unverfestigt gebliebenem ersten Aufbaumaterials angeordnet. Die im Außenbereich liegende Öffnung des Kanals 15 ist an eine in Fig. 4 nicht gezeigte Materialabsaugeinrichtung anschließbar.

Nach Fertigstellung des dreidimensionalen Objekts 2 wird das das Objekt 2 umgebende unverfestigte Pulver 13 durch die Kanäle 15 aus dem Innenbereich des Begrenzungsbereichs 18 abgesaugt und das fertige Objekt 2 anschließend aus der Vorrichtung und/oder aus dem Begrenzungsbereich 18 heraus entnommen.

Ferner können die in Fig. 4 gezeigten Kanäle 15 auch zum Einblasen eines Gasstroms zum Entfernen des das fertige Objekt 2 umgebenden unverfestigten Pulvers 13 verwendet werden. Des Weiteren kann auch eine erste Anzahl von Kanälen als Einblaskanäle und eine zweite Anzahl von Kanälen als Absaugkanäle verwendet werden.

Die zweite und dritte Ausführungsform der Bauunterlage sind auch miteinander kombinierbar. So können beispielsweise in der zweiten Bauplattform 120 Kanäle 15 vorgesehen sein, oder die Kanäle 15 erstrecken sich über die erste Bauplattform 12 und die zweite Bauplattform 120. Ferner kann auch die Grundplatte 11 Kanäle 15 aufweisen.

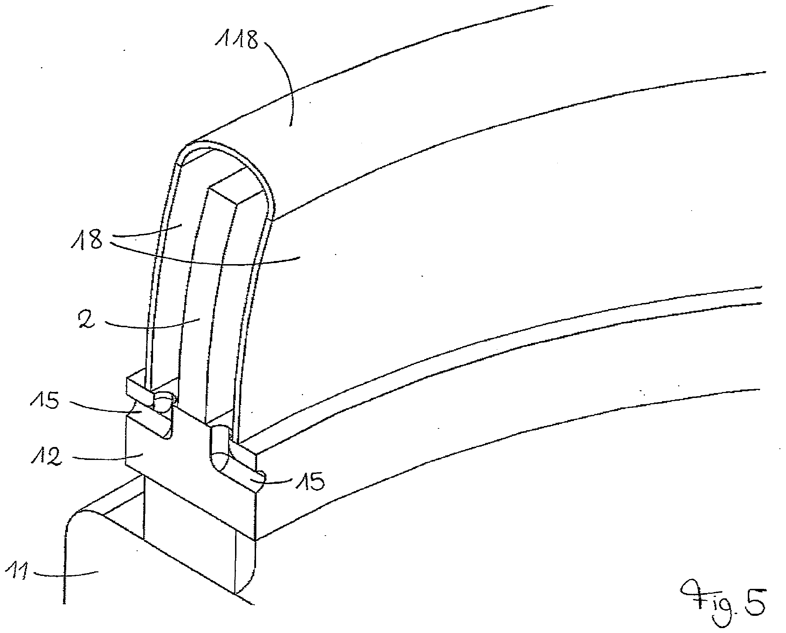

Gemäß einer in Fig. 5 gezeigten Weiterbildung der Erfindung kann nach Fertigstellung des Objekts 2 der Begrenzungsbereich 18 nach oben hin verschlossen werden. Hierzu wird in dem zweiten Herstellungsverfahren eine Abdeckung 118 aus dem zweiten Aufbaumaterial auf dem Begrenzungsbereich 18 gebildet, bevorzugt mit einer oder mehreren Lagen unverfestigten Pulvers zwischen der obersten Schicht des fertigen Objekts 2 und der Abdeckung 118. Das fertige Objekt 2 und das dieses umgebende unverfestigt gebliebene Pulver 13 befindet sich somit in einer im Wesentlichen vollständig geschlossenen Umhüllung. Durch Lösen der Bauplattform 12 von der Grundplatte 11 kann das Objekt 2 mit dem unverfestigten Pulver 13 in der Umhüllung aus der Vorrichtung 1 entnommen werden.

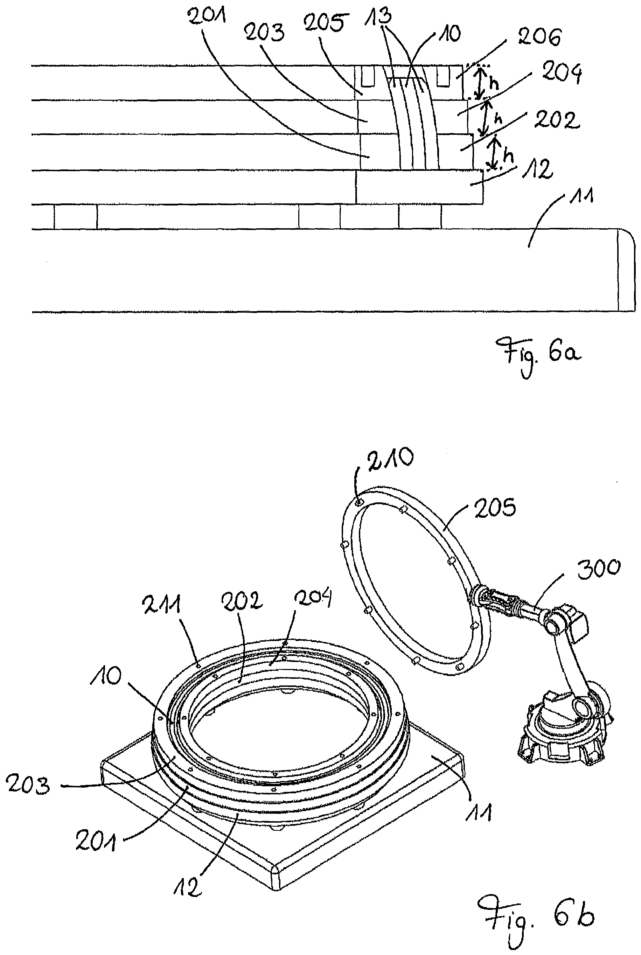

Gemäß einer in Fig. 6a gezeigten Weiterbildung der Erfindung kann der Begrenzungsbereich auch aus Schichtsegmenten 201, 202, 203, 204, 205, 206 gebildet sein, wobei die Schichtsegmente vorzugsweise vorgefertigt sind. Analog zu Fig. 2a und 2b ist das herzustellende Objekt 2 ein Kreiszylinder 10, welcher von unverfestigt gebliebenem pulverförmigen Aufbaumaterial 13 umgeben ist. Der in Fig. 2a und 2b gezeigte innere Kreiszylinder 8 des Begrenzungsbereichs ist hierbei durch die Segmente 201, 203, 205 gebildet und der äußere Kreiszylinder 9 durch die Segmente 202, 204, 206. Die Segmente sind als Ringe mit einer Höhe h ausgebildet, wobei die Höhe h vorzugsweise mehreren, beispielsweise 10, 50 oder 500, Objektschichten entspricht. Die einzelnen Segmente können auch unterschiedliche Höhen aufweisen.

Zum Aufbauen des Begrenzungsbereichs aus Schichtsegmenten kann beispielsweise ein in Fig. 6b gezeigter Roboterarm 300 vorgesehen sein. Dieser positioniert jeweils einen inneren und äußeren Ring als inneren bzw. äußeren Begrenzungsbereich. In Fig. 6b sind die kreisförmigen Segmente 201 und 203 bzw. 202 und 204 bereits aufeinander aufgesetzt. Der Roboterarm 300 setzt nun das Segment 205 auf das Segment 203 auf. Als nächstes wird dann das Segment 206 auf das Segment 204 aufgesetzt und in dem so zwischen den Segmenten 205 und 206 gebildeten Bauraum ein weiterer Bereich des Kreiszylinders 10 aufgebaut, bis das aktuelle Höhenniveau des Begrenzungsbereichs exakt oder annähernd erreicht ist. Wie aus Fig. 6b ersichtlich ist, weist das Schichtsegment 205 an seiner Unterseite Stifte 210 auf. Diese bilden mit in der Oberseite des Schichtsegments 203 vorgesehenen Ausnehmungen 211 eine formschlüssige Verbindung.

Die Schichtsegmente können auch durch eine andere form- oder kraftschlüssige Verbindung miteinander verbunden werden. Die Verbindung ist vorzugsweise lösbar ausgestaltet, so dass der aus den Segmenten gebildete Begrenzungsbereich auf einfache Art und Weise wieder abgebaut werden kann.

In den oben beschriebenen Ausführungsformen sind die Materialaustragsdüse, die Auftragseinrichtung, die Gasdüsen und optional die Belichtungsvorrichtung bewegbar in der Vorrichtung angeordnet und werden im Bauvorgang mit dem Schichtfortschritt in eine vertikale Richtung nach oben bewegt und/oder in einer horizontalen Ebene über eine Schicht hinweg bewegt. Es ist jedoch auch möglich, die Bauunterlage auf einem vertikal bewegbaren Träger anzuordnen und im Bauvorgang mit dem Schichtfortschritt in eine vertikale Richtung nach unten abzusenken und/oder die Bauunterlage in einer horizontalen Ebene verfahrbar anzuordnen und unter der Materialaustragsdüse, der Auftragseinrichtung, den Gasdüsen und der Belichtungsvorrichtung horizontal zu verfahren.

Weitere Modifikationen der Vorrichtung zum Herstellen eines dreidimensionalen Objekts und eines Begrenzungsbereichs sind möglich. So kann die Vorrichtung weiter eine Prozesskammer enthalten, welche nach außen hin thermisch und/oder gasdicht isoliert ist und in welcher das dreidimensionale Objekt mit dem Begrenzungsbereich hergestellt wird.

Die Vorrichtung kann auch ohne die aus den Gasdüsen gebildete Absaugeinrichtung betrieben werden.

Es kann auch lediglich eine Auftragseinrichtung und/oder eine Verfestigungseinrichtung in der Vorrichtung 1 vorgesehen sein. Eine Schicht des ersten und des zweiten Aufbaumaterials werden dann mit der selben Auftragseinrichtung aufgebracht und/oder mit der selben Verfestigungseinrichtung verfestigt und/oder selektiv verfestigt.

Weiter kann die Vorrichtung auch eine Strahlungsheizung umfassen, die zum Beheizen des aufgebrachten Aufbaumaterials auf eine Arbeitstemperatur dient. Die Strahlungsheizung kann beispielsweise als Infrarotstrahler gebildet sein.

Ferner kann die Materialabsaugrichtung nach Fertigstellung des Objekts das unverfestigt gebliebene erste Aufbaumaterial auch von oben her aus dem Begrenzungsbereich entfernen.

Auch wenn die vorliegende Erfindung anhand einer modifizierten Lasersinter- bzw. Laserschmelzvorrichtung beschrieben wurde, ist das erste Herstellungsverfahren nicht auf das Lasersintern oder Laserschmelzen eingeschränkt. Die Erfindung kann auf beliebige Verfahren zum generativen Herstellen eines dreidimensionalen Objektes durch schichtweises Aufbringen und selektives Verfestigen eines pulverförmigen oder flüssigen Aufbaumaterials angewendet werden.

Die im ersten Herstellungsverfahren verwendete Belichtungsvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichtungsvorrichtung jede Einrichtung verwendet werden, mit der Energie als elektromagnetische Strahlung oder Teilchenstrahlung selektiv in eine Schicht des ersten Aufbaumaterials eingebracht werden kann. Anstelle eines Lasers können beispielsweise eine andere Lichtquelle, ein Elektronenstrahl oder jede andere Energie- bzw. Strahlenquelle verwendet werden, die geeignet ist, das erste Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem ersten Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen ersten Aufbaumaterials auch durch 3D-Drucken erfolgen, beispielsweise durch Aufbringen eines Klebers. Allgemein bezieht sich die Erfindung auf das generative Herstellen eines Objekts in einem ersten Herstellungsverfahren mittels schichtweisen Auftragens und selektiven Verfestigens eines ersten Aufbaumaterials unabhängig von der Art und Weise, in der das erste Aufbaumaterial verfestigt wird.

Als erstes Aufbaumaterial können verschiedene Materialien verwendet werden, vorzugsweise Pulver, insbesondere Metallpulver, Kunststoffpulver, Keramikpulver, Sand, gefüllte oder gemischte Pulver.

Zudem sind mit dem ersten Herstellungsverfahren mehrere Objekte gleichzeitig in der Vorrichtung herstellbar.

Auch kann das zweite Herstellungsverfahren ein anderes als das beschriebene Schmelzschichtverfahren sein. Die Erfindung kann auf beliebige Verfahren zum generativen Herstellen eines Begrenzungsbereichs durch schichtweises Aufbringen und Verfestigen eines zweiten Aufbaumaterials angewendet werden. Dabei wird vorzugsweise ein zweites Herstellungsverfahren angewandt, welches in der Lage ist, ohne Einhausung einen Begrenzungsbereich herzustellen, d.h. das zweite Herstellungsverfahren ist vorzugsweise ein frei bauendes Verfahren.

Die Schritte des Aufbringens und Verfestigens des zweiten Aufbaumaterials können dabei integral in einem Schritt erfolgen, beispielsweise durch selektiven Schmelzauftrag eines Materials, das sich während des oder unmittelbar im Nachgang zum Auftrag selbst verfestigt. Je nach verwendetem zweiten Aufbaumaterial und zweitem Herstellungsverfahren kann auch eine zweite Verfestigungsvorrichtung vorgesehen sein zum Verfestigen einer aufgetragenen Schicht des zweiten Aufbaumaterials.

Das erste und das zweite Herstellungsverfahren unterscheiden sich im Schritt des Aufbringens einer Schicht des Aufbaumaterials und optional im Schritt des Verfestigens der aufgebrachten Schicht. Dabei können das erste und das zweite Aufbaumaterial identisch sein. Es können aber auch ein erstes und ein von dem ersten verschiedenes zweites Aufbaumaterial verwendet werden, wobei sich die Aufbaumaterialien beispielsweise in ihrer chemischen Stoffzusammensetzung unterscheiden und/oder in ihrer Partikelgröße und/oder in ihrer Partikelgrößenverteilung und/oder in ihrem Aggregatzustand und/oder in ihrer Dichte. Allgemein weisen das erste und das zweite Aufbaumaterial bevorzugt zumindest eine chemische und/oder physikalische Eigenschaft auf, in der sie sich eindeutig unterscheiden.

Das erste und das zweite Herstellungsverfahren können wie in obiger Ausführungsform beschrieben gleichzeitig durchgeführt werden, d.h. die Schritte des Aufbringens und Verfestigens des ersten und des zweiten Aufbaumaterials erfolgen gleichzeitig. Es ist aber auch möglich, die beiden Herstellungsverfahren nur zeitweise gleichzeitig oder einander abwechselnd durchzuführen.

## Patentansprüche

1. Verfahren zum Herstellen eines dreidimensionalen Objekts (2, 10) und eines Begrenzungsbereichs (8, 9, 18) durch schichtweises Aufbringen und Verfestigen wenigstens eines Aufbaumaterials,
wobei das dreidimensionale Objekt (2, 10) mit einem ersten generativen Herstellungsverfahren auf Basis eines ersten Aufbaumaterials hergestellt wird und der Begrenzungsbereich (8, 9, 18) mit einem von dem ersten generativen Herstellungsverfahren unterschiedlichen zweiten generativen Herstellungsverfahren auf Basis eines zweiten Aufbaumaterials hergestellt wird,
wobei das erste generative Herstellungsverfahren die Schritte umfasst:
Aufbringen einer Schicht des ersten Aufbaumaterials auf eine Bauunterlage (11, 12) oder eine bereits zuvor aufgebrachte Schicht,
selektives Verfestigen der aufgebrachten Schicht an dem Querschnitt des Objekts (2, 10) in der jeweiligen Schicht entsprechenden Stellen und
Wiederholen der Schritte des Aufbringens und des selektiven Verfestigens, bis das Objekt (2, 10) fertiggestellt ist, und
wobei das erste und das zweite generative Herstellungsverfahren derart durchgeführt werden, dass der Begrenzungsbereich (8, 9, 18) das Objekt (2, 10) zumindest abschnittsweise umschließt,
wobei sich das erste generative Herstellungsverfahren von dem zweiten generativen Herstellungsverfahren dadurch unterscheidet, dass das Aufbringen des ersten und des zweiten Aufbaumaterials mit unterschiedlichen Verfahren erfolgt.

2. Verfahren nach Anspruch 1, wobei sich das erste generative Herstellungsverfahren von dem zweiten generativen Herstellungsverfahren weiter dadurch unterscheidet, dass das Verfestigen des ersten und des zweiten Aufbaumaterials mit unterschiedlichen Verfahren erfolgt.

3. Verfahren nach Anspruch 1 oder 2, wobei das zweite generative Herstellungsverfahren die Schritte umfasst:
selektives Auftragen einer Schicht des zweiten Aufbaumaterials auf eine Bauunterlage (11, 12, 120) oder eine zuvor aufgetragene Schicht an dem Querschnitt des Begrenzungsbereichs (8, 9, 18) in der jeweiligen Schicht entsprechenden Stellen, Verfestigen der aufgebrachten Schicht und
Wiederholen der Schritte des selektiven Auftragens und des Verfestigens, bis der Begrenzungsbereich fertiggestellt ist.

4. Verfahren nach einem der Ansprüche 1 bis 3, wobei das erste Aufbaumaterial und das zweite Aufbaumaterial unterschiedlich sind.

5. Verfahren nach einem der Ansprüche 1 bis 4, wobei das erste generative Herstellungsverfahren und das zweite generative Herstellungsverfahren zumindest zeitweise gleichzeitig oder einander abwechselnd durchgeführt werden.

6. Verfahren nach einem der Ansprüche 1 bis 5, wobei das erste und das zweite generative Herstellungsverfahren derart durchgeführt werden, dass der Begrenzungsbereich (8, 9, 18) das Objekt (2, 10) in zumindest zwei Raumrichtungen, vorzugsweise in einer schichtparallelen x- und einer schichtparallelen y-Richtung, im Wesentlichen vollständig umschließt.

7. Verfahren nach einem der Ansprüche 1 bis 6, wobei das Aufbringen einer Schicht des ersten Aufbaumaterials gemäß dem ersten generativen Herstellungsverfahren im Wesentlichen ausschließlich in einer durch den Begrenzungsbereich (8, 9, 18) begrenzten Fläche erfolgt.

8. Verfahren nach einem der Ansprüche 1 bis 7, wobei das dreidimensionale Objekt (2, 10) nach seiner Fertigstellung aus dem Begrenzungsbereich (8, 9, 18) entfernt wird und/oder der Begrenzungsbereich (8, 9, 18) von dem Objekt (2, 10) entfernt wird.

9. Verfahren nach einem der Ansprüche 1 bis 8, wobei das erste generative Herstellungsverfahren ein pulverbettbasiertes Verfahren unter Verwendung einer Quelle elektromagnetischer Strahlung (22) oder Teilchenstrahlung umfasst und/oder wobei das zweite generative Herstellungsverfahren ein nicht pulverbettbasiertes Verfahren, insbesondere ein Schmelzschichtungsverfahren, umfasst.

10. Vorrichtung zum Herstellen eines dreidimensionalen Objekts (2, 10) und eines Begrenzungsbereichs (8, 9, 18) durch schichtweises Aufbringen und Verfestigen wenigstens eines Aufbaumaterials,
ausgebildet, das dreidimensionale Objekt (2, 10) mit einem ersten generativen Herstellungsverfahren auf Basis eines ersten Aufbaumaterials herzustellen und den Begrenzungsbereich (8, 9, 18) mit einem von dem ersten generativen Herstellungsverfahren unterschiedlichen zweiten generativen Herstellungsverfahren auf Basis eines zweiten Aufbaumaterials herzustellen, wobei sich das erste generative Herstellungsverfahren von dem zweiten generativen Herstellungsverfahren dadurch unterscheidet, dass das Aufbringen des ersten und des zweiten Aufbaumaterials mit unterschiedlichen Verfahren erfolgt,
wobei die Vorrichtung (1) zur Durchführung des ersten generativen Herstellungsverfahren umfasst:
eine erste Auftragseinrichtung (16), die im Betrieb eine Schicht des ersten Aufbaumaterials auf eine Bauunterlage (11, 12) oder eine bereits zuvor aufgebrachte Schicht aufbringt,
und eine erste Verfestigungseinrichtung (20), die im Betrieb eine selektive Verfestigung der aufgebrachten Schicht an dem Querschnitt des Objekts (2, 10) in der jeweiligen Schicht entsprechenden Stellen durchführt,
wobei die Vorrichtung (1) weiter ausgebildet ist die Schritte des Aufbringens und des selektiven Verfestigens zu wiederholen, bis das Objekt (2, 10) fertiggestellt ist, und
wobei die Vorrichtung (1) das erste und das zweite generative Herstellungsverfahren im Betrieb derart durchführt, dass der Begrenzungsbereich (8, 9, 18) das Objekt (2, 10) zumindest abschnittsweise umschließt.

11. Vorrichtung nach Anspruch 10, wobei die Vorrichtung (1) zumindest eine zweite Auftrags- (116, 117) und/oder Verfestigungseinrichtung umfasst zum Auftragen und/oder Verfestigen des zweiten Aufbaumaterials gemäß des zweiten generativen Herstellungsverfahrens.

12. Vorrichtung nach einem der Ansprüche 10 oder 11, wobei die Vorrichtung (1) zumindest eine Absaugeinrichtung (14, 15) umfasst.

13. Vorrichtung nach einem der Ansprüche 10 bis 12, wobei die Auftragseinrichtung(en) (16, 116, 117) und/oder die Verfestigungseinrichtung(en) (20) und/oder die Absaugeinrichtung(en) (14, 15) bewegbar in der Vorrichtung (1) angeordnet sind.

14. Vorrichtung nach einem der Ansprüche 10 bis 13, wobei die Vorrichtung (1) eine erste Bauunterlage (12) umfasst zum Aufbauen des dreidimensionalen Objekts (2, 10), sowie zumindest eine zweite Bauunterlage (120) zum Aufbauen des Begrenzungsbereichs (8, 9, 18).

15. Steuereinheit für eine Vorrichtung gemäß einem der Ansprüche 10 bis 14,
wobei die Steuereinheit (29) ausgebildet und/oder programmiert ist die Vorrichtung (1) so zu steuern, dass sie dazu geeignet ist ein Verfahren gemäß einem der Ansprüche 1 bis 9 durchzuführen.

## Claims

1. A method for producing a three-dimensional object (2, 10) and a boundary region (8, 9, 18) by layer-wise applying and solidifying of at least one building material,
wherein the three-dimensional object (2, 10) is produced with a first generative production method on the basis of a first building material and the boundary region (8, 9, 18) is produced with a second generative production method, which is different from the first generative production method, on the basis of a second building material,
wherein the first generative production method comprises the steps:
applying a layer of the first building material on a building base (11, 12) or on an already previously applied layer,
selectively solidifying the applied layer at positions corresponding to the cross-section of the object (2, 10) in the respective layer and
repeating the steps of applying and selectively solidifying until the object (2, 10) is completed, and
wherein the first and the second generative production method are carried out such that the boundary region (8, 9, 18) encloses the object (2, 10) at least partially,
wherein the first generative production method differs from the second generative production method in that the application of the first and the second building material is carried out with different methods.

2. The method according to claim 1, wherein the first generative production method further differs from the second generative production method in that the solidification of the first and the second building material is carried out with different methods.

3. The method according to claim 1 or 2, wherein the second generative production method comprises the steps:
selectively applying a layer of the second building material on a building base (11, 12, 120) or on a previously applied layer at positions corresponding to the cross-section of the boundary region (8, 9, 18) in the respective layer,
solidifying the applied layer and
repeating the steps of selectively applying and solidifying until the boundary region is completed.

4. The method according to one of claims 1 to 3, wherein the first building material and the second building material are different.

5. The method according to one of claims 1 to 4, wherein the first generative production method and the second generative production method are carried out at least temporarily simultaneously or alternately.

6. The method according to one of claims 1 to 5, wherein the first and the second generative production methods are carried out such that the boundary region (8, 9, 18) encloses the object (2, 10) substantially completely in at least two spatial directions, preferably in a layer-parallel x- and a layer-parallel y-direction.

7. The method according to one of claims 1 to 6, wherein the application of a layer of the first building material according to the first generative production method is carried out substantially exclusively in an area bounded by the boundary region (8, 9, 18).

8. The method according to one of claims 1 to 7, wherein, after completion, the three-dimensional object (2, 10) is removed from the boundary region (8, 9, 18) and/or the boundary region (8, 9, 18) is removed from the object (2, 10).

9. The method according to one of claims 1 to 8, wherein the first generative production method comprises a powder bed-based method using a source of electromagnetic radiation (22) or particle radiation and/or wherein the second generative production method comprises a non powder bed-based method, in particular a fused deposition modeling method.

10. A device for producing a three-dimensional object (2, 10) and a boundary region (8, 9, 18) by layer-wise applying and solidifying at least one building material,
configured to produce the three-dimensional object (2, 10) with a first generative production method on the basis of a first building material and to produce the boundary region (8, 9, 18) with a second generative production method, which is different from the first generative production method, on the basis of a second building material, wherein the first generative production method differs from the second generative production method in that the application of the first and the second building material is carried out with different methods,
wherein the device (1) for carrying out the first generative production method comprises:
a first application device (16) which, during operation, applies a layer of the first building material on a building base (11, 12) or on an already previously applied layer,
and a first solidification device (20) which, during operation, carries out a selective solidification of the applied layer at positions corresponding to the cross-section of the object (2, 10) in the respective layer,
wherein the device (1) is further configured to repeat the steps of applying and selectively solidifying until the object (2, 10) is completed, and
wherein the device (1) during operation carries out the first and the second generative production methods such that the boundary region (8, 9, 18) encloses the object (2, 10) at least partially.

11. The device according to claim 10, wherein the device (1) comprises at least a second application (116, 117) and/or solidification device for applying and/or solidifying the second building material according to the second generative production method.

12. The device according to one of claims 10 or 11, wherein the device (1) comprises at least one suction device (14, 15).

13. The device according to one of claims 10 to 12, wherein the application device(s) (16, 116, 117) and/or the solidification device(s) (20) and/or the suction device(s) (14, 15) are movably arranged in the device (1).

14. The device according to one of claims 10 to 13, wherein the device (1) comprises a first building base (12) for building the three-dimensional object (2, 10) and at least a second building base (120) for building the boundary region (8, 9, 18).

15. A control unit for a device according to one of claims 10 to 14,
wherein the control unit (29) is configured and/or programmed to control the device (1) such that it is suited to carry out a method according to one of claims 1 to 9.

## Revendications

1. Procédé destiné à fabriquer un objet (2, 10) tridimensionnel et une zone de délimitation (8, 9, 18) par application et solidification par couches d'au moins un matériau de construction,
dans lequel l'objet (2, 10) tridimensionnel est fabriqué avec un premier procédé de fabrication générative sur la base d'un premier matériau de construction et la zone de délimitation (8, 9, 18) est fabriquée avec un second procédé de fabrication générative différent du premier procédé de fabrication générative sur la base d'un second matériau de construction,
dans lequel le premier procédé de fabrication générative comprend les étapes consistant à :
appliquer une couche du premier matériau de construction sur un support de construction (11, 12) ou une couche déjà appliquée au préalable,
solidifier sélectivement la couche appliquée contre la section transversale de l'objet (2, 10) en des emplacements correspondant à la couche respective et
répéter les étapes de l'application et de la solidification sélective jusqu'à ce que l'objet (2, 10) soit fabriqué, et
dans lequel le premier et le second procédé de fabrication générative sont exécutés de telle sorte que la zone de délimitation (8, 9, 18) enserre au moins partiellement l'objet (2, 10),
dans lequel le premier procédé de fabrication générative se différencie du second procédé de fabrication générative en ce que l'application du premier et du second matériau de construction se produit avec des procédés différents.

2. Procédé selon la revendication 1, dans lequel le premier procédé de fabrication générative se différencie en outre du second procédé de fabrication générative en ce que la solidification du premier et du second matériau de construction se produit avec des procédés différents.

3. Procédé selon la revendication 1 ou 2, dans lequel le second procédé de fabrication générative comprend les étapes consistant à :
appliquer sélectivement une couche du second matériau de construction sur un support de construction (11, 12, 120) ou une couche déjà appliquée au préalable contre la section transversale de la zone de délimitation (8, 9, 18) en des emplacements correspondant à la couche respective,
solidifier la couche appliquée et
répéter les étapes de l'application sélective et de la solidification jusqu'à ce que la zone de délimitation soit fabriquée.

4. Procédé selon l'une des revendications 1 à 3, dans lequel le premier matériau de construction et le second matériau de construction sont différents.

5. Procédé selon l'une des revendications 1 à 4, dans lequel le premier procédé de fabrication générative et le second procédé de fabrication générative sont exécutés au moins partiellement simultanément ou mutuellement en alternance.

6. Procédé selon l'une des revendications 1 à 5, dans lequel le premier et le second procédé de fabrication générative sont exécutés de telle sorte que la zone de délimitation (8, 9, 18) enserre essentiellement entièrement l'objet (2, 10) dans au moins deux directions spatiales, de préférence dans une direction x parallèle à la couche et une direction y parallèle à la couche.

7. Procédé selon l'une des revendications 1 à 6, dans lequel l'application d'une couche du premier matériau de construction se produit selon le premier procédé de fabrication générative essentiellement exclusivement dans une surface délimitée par la zone de délimitation (8, 9, 18).

8. Procédé selon l'une des revendications 1 à 7, dans lequel l'objet (2, 10) tridimensionnel, après sa fabrication, est éloigné de la zone de délimitation (8, 9, 18) et/ou la zone de délimitation (8, 9, 18) est éloignée de l'objet (2, 10).

9. Procédé selon l'une des revendications 1 à 8, dans lequel le premier procédé de fabrication générative comprend un procédé basé sur un lit de poudre à condition d'utiliser une source de rayonnement électromagnétique (22) ou un rayonnement de particules et/ou dans lequel le second procédé de fabrication générative comprend un procédé non basé sur un lit de poudre, en particulier un procédé de revêtement fusible.

10. Dispositif destiné à fabriquer un objet (2, 10) tridimensionnel et une zone de délimitation (8, 9, 18) par application et solidification par couches d'au moins un matériau de construction,
conçu pour fabriquer l'objet (2, 10) tridimensionnel avec un premier procédé de fabrication générative sur la base d'un premier matériau de construction et fabriquer la zone de délimitation (8, 9, 18) avec un second procédé de fabrication générative différent du premier procédé de fabrication générative sur la base d'un second matériau de construction, dans lequel le premier procédé de fabrication générative se différencie du second procédé de fabrication générative en ce que l'application du premier et du second matériau de construction se produit avec des procédés différents,
dans lequel le dispositif (1) comprend pour l'exécution du premier procédé de fabrication générative :
un premier équipement d'application (16) qui, en fonctionnement, applique une couche du premier matériau de construction sur un support de construction (11, 12) ou une couche déjà appliquée au préalable,
et un premier équipement de solidification (20) qui, en fonctionnement, exécute une solidification sélective de la couche appliquée contre la section transversale de l'objet (2, 10) en des emplacements correspondant à la couche respective,
dans lequel le dispositif (1) est en outre conçu pour répéter les étapes de l'application et de la solidification sélective jusqu'à ce que l'objet (2, 10) soit fabriqué, et
dans lequel le dispositif (1) exécute, en fonctionnement, le premier et le second procédé de fabrication générative de telle sorte que la zone de délimitation (8, 9, 18) enserre au moins partiellement l'objet (2, 10).

11. Dispositif selon la revendication 10, dans lequel le dispositif (1) comprend au moins un deuxième équipement d'application (116, 117) et/ou de solidification pour appliquer et/ou solidifier le second matériau de construction selon le second procédé de fabrication générative.

12. Dispositif selon l'une des revendications 10 ou 11, dans lequel le dispositif (1) comprend au moins un équipement d'aspiration (14, 15).

13. Dispositif selon l'une des revendications 10 à 12, dans lequel le(s) équipement(s) d'application (16, 116, 117) et/ou le(s) équipement(s) de solidification (20) et/ou le(s) équipement(s) d'aspiration (14, 15) sont agencés de façon mobile dans le dispositif (1).

14. Dispositif selon l'une des revendications 10 à 13, dans lequel le dispositif (1) comprend un premier support de construction (12) pour construire l'objet (2, 10) tridimensionnel, ainsi qu'au moins un deuxième support de construction (120) pour construire la zone de délimitation (8, 9, 18).

15. Unité de commande pour un dispositif selon l'une des revendications 10 à 14,
dans lequel l'unité de commande (29) est conçue et/ou programmée pour commander le dispositif (1) de telle sorte qu'il soit adapté pour exécuter un procédé selon l'une des revendications 1 à 9.
